# FASCICULE DE BREVET EUROPEEN

(11) **EP 1 225 673 B1**
(45) Date de publication et mention de la délivrance du brevet: **08.09.2010**
(21) Numéro de dépôt: 01410160.4
(22) Date de dépôt: 10.12.2001
(51) Int. Cl.: H02H 7/30

(54) **Dispositif de distribution électrique, installation comportant un tel dispositif, et procédé de protection électrique**
Elektrische Energieverteilungsvorrichtung, Anlage mit einer solchen Vorrichtung und Verfahren zum elektrischen Schutz
Electrical power distribution device, installation comprising such a device and method for electrical protection

(30) Priorité: 22.01.2001 FR 0100807
(43) Date de publication de la demande: 24.07.2002
(73) Titulaire: Schneider Electric Industries SAS, 92500 Rueil-Malmaison (FR)
(72) Inventeur: Perichon, Pierre, Schneider Electric Industries SA, 38050 Grenoble Cedex 09 (FR)
(74) Mandataire: Tripodi, Paul

(56) Documents cités:
- FR-A- 2 688 951

## Description

L'invention concerne un dispositif de distribution électrique comportant une entrée de raccordement d'une ligne électrique d'arrivée, des moyens de protection électrique connectés à l'arrivée et comportant des départs de distribution électrique destinés à alimenter des charges électriques, lesdits moyens de protection comportant :
- une partie principale comportant des moyens de coupure principaux connectés à l'entrée de raccordement de la ligne électrique d'arrivée, et des moyens de contrôle principaux pour contrôler l'ouverture et la fermeture des moyens de coupure principaux, et
- une ligne de répartition d'énergie électrique connectée aux moyens de coupure principaux de la partie principale.

L'invention concerne aussi une installation comportant une ligne électrique d'arrivée, un dispositif de distribution électrique connectée à la ligne électrique d'arrivée, et des lignes de distributions connectées entre le dispositif distribution électrique et des appareils ou des charges électriques. L'invention concerne aussi un procédé de protection électrique pour un dispositif de distribution électrique.

Les dispositifs de distribution électrique connus comportent généralement un tableau comportant un disjoncteur de tête sur lequel est connectée une ligne d'arrivée en amont et des disjoncteurs divisionnaires ou des fusibles en aval pour protéger des lignes de distribution qui alimentent des charges ou des prises de courant.

Les disjoncteurs divisionnaires peuvent être remplacés par des disjoncteurs ou des interrupteurs comportant un relais de télécommande commandé en ouverture ou en fermeture par une centrale de protection. Un tel dispositif est décrit dans les documents EP 0096601 et DE 3111255.

Dans un document FR 2688951, le disjoncteur de tête est un interrupteur électronique statique et des départs sont connectés à travers des relais d'isolement. Le disjoncteur de tête peut être aussi du type limiteur comme celui qui est décrit dans le document EP 0834975.

Dans des installations connues ces dispositifs de distribution peuvent être connectés en cascade. Dans ce cas, les calibres des disjoncteurs sont généralement décroissants pour assurer une sélectivité entre les dispositifs. La sélectivité peut aussi être améliorée en reliant les dispositifs de distribution ou leurs disjoncteurs par des liaisons de sélectivité logique.

Les dispositifs de l'état de la technique ne permettent pas une gestion facile de l'installation des installations électriques. De plus, dans des installations réparties et peu accessibles, il est avantageux d'avoir des dispositifs de coupure ayant une fiabilité et une endurance très élevées.

L'invention a pour but un dispositif de distribution électrique ayant une fiabilité et une endurance améliorées et permettant une gestion facilitée d'une installation électrique, une installation comportant un tel dispositif, et un procédé de protection électrique améliorant la fiabilité et la gestion des défauts de protection électrique.

Dans un dispositif selon l'invention, lesdits moyens de protection comportent au moins une partie secondaire séparée de la partie principale et comportant au moins un dispositif de coupure secondaire et des moyens de contrôle secondaires pour commander l'ouverture et la fermeture d'au moins dispositif de coupure secondaire, ledit au moins un dispositif de coupure secondaire étant connecté à ladite ligne de répartition et à au moins un départ de distribution électrique, les moyens de contrôle secondaires autorisant l'ouverture d'au moins un dispositif de coupure secondaire si un courant traversant ledit dispositif de coupure est inférieur à un seuil de courant d'ouverture prédéterminé.

Dans un mode de réalisation préférentiel, les moyens de contrôle principaux comportent des premiers moyens de détection d'un courant de défaut principal et des premiers moyens de commande commandant l'ouverture des moyens de coupure principaux pendant une première durée prédéterminée, lesdits premiers moyens de détection détectant un défaut principal lorsqu'un premier seuil de courant de défaut principal est dépassé par un signal représentatif d'un courant circulant dans les moyens de coupure principaux.

Avantageusement, les premiers moyens de commande commandent l'ouverture des moyens de coupure principaux après un délai ayant une seconde durée prédéterminée et succédant à la détection d'un défaut principal.

De préférence, la valeur maximale de la première durée prédéterminée est de dix millisecondes (10 mS).

De préférence, la partie principale comporte un disjoncteur de branchement connecté à l'entrée de raccordement d'une ligne électrique d'arrivée et connecté série avec les moyens de coupure principaux.

Avantageusement, les moyens de coupure principaux sont des moyens de coupure à semi-conducteurs de puissance.

Avantageusement, les moyens de contrôle secondaires comportent des seconds moyens de détection d'un courant de défaut secondaire circulant dans au moins un dispositif de coupure secondaire, et des seconds moyens de commande commandant l'ouverture dudit au moins un dispositif de coupure secondaire si un défaut secondaire a été détecté et si un courant traversant ledit dispositif de coupure est inférieur au seuil de courant d'ouverture prédéterminé, lesdits seconds moyens de détection détectant un défaut secondaire lorsqu'un second seuil de défaut secondaire est dépassé par un signal représentatif d'un courant circulant dans ledit au moins un dispositif de coupure secondaire.

De préférence, les seconds moyens de détection d'un courant de défaut secondaire circulant dans au moins un dispositif de coupure secondaire comportent des moyens pour détecter un défaut polaire correspondant à au moins un courant circulant dans au moins un conducteur dudit au moins un dispositif de coupure secondaire.

De préférence, les seconds moyens de détection d'un courant de défaut secondaire circulant dans au moins un dispositif de coupure secondaire détectent un courant de défaut différentielle circulant dans au moins deux conducteurs dudit au moins un dispositif de coupure secondaire.

Avantageusement, au moins un dispositif de coupure secondaire est un relais électromagnétique. Un dispositif de coupure secondaire peut comporter un dispositif de coupure à composant électronique de puissance.

Dans un mode de réalisation particulier, le dispositif de distribution comporte une ligne de communication et au moins une partie secondaire comporte des moyens de contrôle secondaires comportant des moyens de communication connectés à la ligne de communication, lesdits moyens de communication pouvant recevoir des informations de fermeture pour fermer au moins un dispositif de coupure secondaire.

Avantageusement, le dispositif de distribution comporte une centrale connectée à la ligne de communication pour recevoir des informations d'états et pour commander l'ouverture et/ou la fermeture d'au moins un dispositif de coupure secondaire.

Avantageusement, les moyens de contrôle primaires comportent des moyens de communication connectés à la ligne de communication pour recevoir des signaux de commande.

Dans un mode de réalisation particulier, des moyens de contrôles secondaires envoient sur la ligne de communication un signal prioritaire de caractéristiques différentes d'un signal de communication d'informations pour commander l'ouverture des moyens de coupure principaux lorsqu'un défaut électrique dans un départ alimenté par un dispositif de coupure secondaire est détecté et pour commander la fermeture des moyens de coupure principaux lorsqu'un dispositif de coupure secondaire a été commandé en ouverture suite à un défaut, les moyens de contrôle primaires comportant des moyens pour détecter ledit signal prioritaire et pour commander l'ouverture et la fermeture des moyens de coupure principaux en fonction de la présence dudit signal prioritaire.

De préférence, qu'au moins une partie secondaire est disposée dans une boîte de distribution ou de raccordement électrique de bâtiment.

Avantageusement, au moins une partie secondaire est disposée dans un module de communication d'automatisme de bâtiment, les moyens de contrôle secondaires de la dite partie secondaire comportant des fonctions de protections électriques et des fonctions de communication et d'automatismes pour commander des dispositifs de coupure secondaires.

De préférence, une ligne de répartition d'énergie électrique comportant au moins deux conducteurs, une ligne de communication comportant au moins deux conducteurs, et une ligne de terre ou de masse électrique comportant au moins un conducteur sont disposées dans une nappe comportant au moins cinq conducteurs.

Une installation électrique selon l'invention comporte une ligne électrique d'arrivée, un dispositif de distribution électrique connectée à la ligne électrique d'arrivée, et des lignes de distributions connectées entre le dispositif de distribution électrique et des appareils ou des charges électriques, le dispositif de distribution étant un dispositif de distribution tel que défini ci-dessus et ayant une partie principale connectée à la ligne électrique d'arrivée et au moins une partie secondaire connectée à des lignes de distribution.

Un procédé de protection électrique selon l'invention comporte :
- une première étape de détection d'un défaut électrique dans des moyens de coupure principaux,
- une seconde étape de détection d'un défaut électrique dans des moyens de coupure secondaires reliés par une ligne de répartition aux moyens de coupures principaux,
- une étape de temporisation,
- une étape d'ouverture des moyens de coupure principaux,
- une étape d'ouverture des moyens de coupure secondaires lorsqu'un courant les traversant est inférieur à une valeur de seuil de courant d'ouverture prédéterminé suite à une détection de défaut à la seconde étape de détection,
- une première étape de fermeture des moyens de coupure principaux après un délai prédéterminé.

Dans un mode réalisation préférentiel, le procédé comporte :
- une seconde étape d'ouverture des moyens de coupure principaux commander par l'émission d'un signal prioritaire de commande d'ouverture sur une ligne de communication reliée entre des moyens de coupure secondaire et les moyens de coupure principaux, ledit signal prioritaire étant émis lorsqu'un courant de défaut circulant dans un dispositif de coupure secondaire est détecté,
- une seconde étape fermeture des moyens de coupure principaux après une étape fin d'émission dudit signal prioritaire.

Dans un autre mode réalisation, un procédé de protection électrique selon l'invention comporte :
- une première étape de détection d'un défaut électrique dans des moyens de coupure secondaires reliés par une ligne de répartition et une ligne de communication à des moyens de coupures principaux,
- une étape de début d'émission d'un signal prioritaire de commande d'ouverture sur ladite ligne de communication pour la commande d'ouverture de moyens de coupure principaux,
- une première étape d'ouverture des moyens de coupure principaux commandés par l'émission dudit signal prioritaire de commande d'ouverture sur ladite ligne de communication,
- une seconde étape d'ouverture des moyens de coupure secondaires lorsqu'un courant les traversant est inférieur à une valeur de seuil de courant d'ouverture prédéterminé suite à une détection de défaut à la première étape de détection,
- une étape de fin d'émission du signal prioritaire de commande d'ouverture,
- une étape de fermeture des moyens de coupure principaux après l'étape de fin d'émission du signal prioritaire de commande d'ouverture.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente le schéma d'un dispositif de distribution comportant des caractéristiques de l'invention,
- la figure 2 représente un schéma d'une partie principale d'un dispositif de distribution selon un mode de réalisation de l'invention,
- la figure 3 représente un schéma d'une partie secondaire d'un dispositif de distribution selon un mode de réalisation de l'invention,
- les figures 4A, 4B et 4C représentent des signaux dans un dispositif de distribution selon un premier mode de réalisation de l'invention ;
- les figures 5A, 5B, 5C et 5D représentent des signaux dans un dispositif de distribution selon un second mode de réalisation de l'invention ;
- la figure 6 représente un schéma d'un dispositif et d'une installation selon un mode de réalisation de l'invention ;
- 1a figure 7 représente un plan d'une installation électrique selon un mode de réalisation de l'invention ;
- la figure 8 représente un premier procédé de protection électrique selon un mode de réalisation de l'invention ; et
- la figure 9 représente un second procédé de protection électrique selon un mode de réalisation de l'invention.

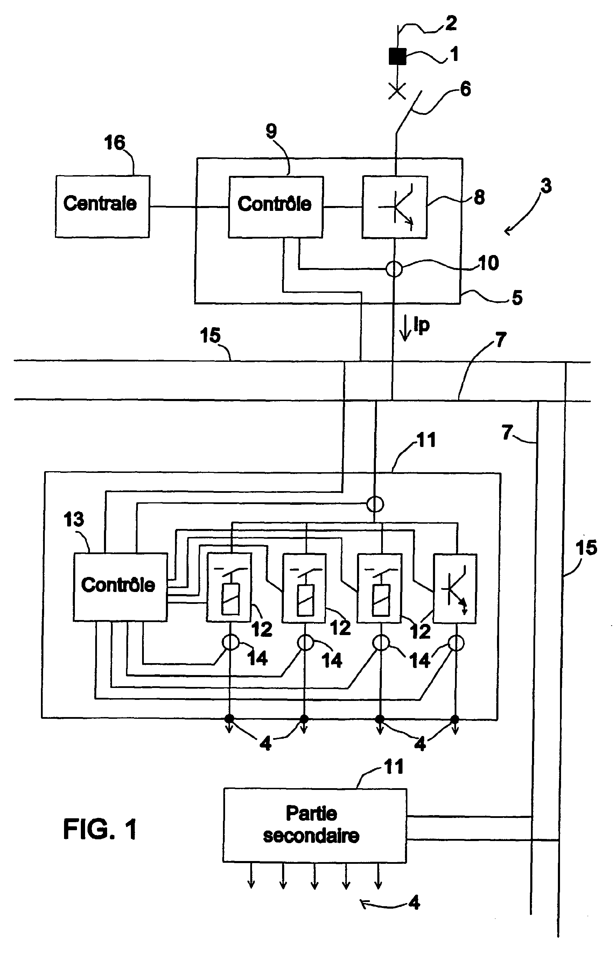

Un dispositif de distribution électrique représenté sur la figure 1 comporte une entrée 1 de raccordement électrique pour raccorder une ligne d'arrivée 2 à des moyens 3 de protection électrique comportant des départs 4 pour alimenter des charges électriques. Ces moyens de protection électrique comportent une partie principale 5 connectée à l'entrée 1 à travers un disjoncteur de tête 6 et à une ligne 7 de répartition d'énergie électrique. La partie principale 5 comporte un dispositif de coupure principal 8 connecté en série entre l'entrée 1 et la ligne de répartition 7 pour établir ou interrompre un courant électrique dans la ligne 7, et un circuit de contrôle principal 9 connecté audit dispositif de coupure principal 8 pour contrôler l'ouverture et la fermeture dudit dispositif 8. Au moins un capteur de courant 10 disposé sur au moins un conducteur connecté au dispositif de coupure principal 8 fournit un signal représentatif d'un courant Ip circulant dans le dispositif 8.

La ligne de répartition 7 alimente au moins une partie secondaire 11 séparée de la partie principale et comportant au moins un dispositif de coupure secondaire 12 et au moins un circuit de contrôle 13 secondaire pour commander l'ouverture et la fermeture d'au moins un dispositif de coupure secondaire 12. Ledit au moins un dispositif de coupure secondaire 12 étant connecté à la ligne 7 de répartition et à au moins un départ 4 de distribution électrique. Au moins un capteur de courant 14 est disposé sur au moins un conducteur connecté à un dispositif de coupure secondaire pour fournir un signal représentatif d'un courant circulant dans ledit dispositif de coupure secondaire 12.

Lorsque les dispositifs de coupure secondaires sont des dispositifs à contact électriques par exemple des relais électromagnétiques il est préférable d'augmenter la fiabilité et la durée de vie en évitant l'usure des contacts. Cet avantage est particulièrement important lorsque les parties secondaires sont réparties en plusieurs endroits d'une installation et peu accessibles.

Le circuit de contrôle secondaire 13 commande ou autorise l'ouverture d'un dispositif de coupure secondaire lorsqu'un courant qui le traverse est inférieur à un seuil de courant d'ouverture prédéterminé. Ainsi, lorsqu'un défaut électrique apparaît, le circuit de contrôle 13 détecte à travers un capteur de courant 14 le dispositif de coupure secondaire qui doit être coupé, puis, il attend que le dispositif de coupure principal s'ouvre pour limiter le courant traversant ledit dispositif secondaire. Ensuite, lorsque le courant devient inférieur au seuil de courant d'ouverture prédéterminé le circuit de contrôle donne un ordre d'ouverture au dispositif de coupure secondaire concerné par le défaut. En agissant ainsi, les contacts des circuits secondaires sont préservés et la fiabilité et la longévité sont augmentées.

Le circuit de contrôle principal 9 comporte des moyens pour déterminer un courant de défaut principal et commande l'ouverture du dispositif de coupure principal pendant une première durée prédéterminée suffisante pour laisser le temps au dispositif de coupure secondaire de s'ouvrir après une diminution du courant de défaut qui le traverse. Cette durée est aussi suffisamment courte pour ne pas perturber le fonctionnement de circuits électriques à cause d'une interruption du courant. Par exemple, une valeur de la première durée peut être de 10 millisecondes (mS). Avantageusement, la commande de l'ouverture du circuit de coupure principal est commandée après un délai ayant une seconde durée prédéterminée pour permettre à un circuit de contrôle secondaire de détecter la présence d'un défaut afin de commander par la suite l'ouverture d'un dispositif de coupure secondaire.

Dans un autre mode de réalisation le dispositif de distribution électrique comporte une ligne 15 de communication reliant des circuits de communication disposés dans au moins une partie secondaire, et notamment dans une centrale 16 de communication et dans la partie principale. Dans la partie secondaire, un circuit de communication peut recevoir des informations de fermeture d'au moins un appareil de coupure secondaire après notamment l'élimination d'un défaut électrique. La centrale peut recevoir des informations d'états et commander la fermeture et/ou l'ouverture de d'au moins un dispositif de coupure secondaire.

Le circuit de contrôle 9 de la partie principale 5 comporte un circuit de communication connecté à la ligne de communication 15 pour recevoir un signal de commande. Avantageusement, un circuit de contrôle secondaire 13 envoie sur la ligne de communication un signal particulier prioritaire Sp de caractéristiques différentes d'un signal de communication classique pour commander l'ouverture du dispositif de coupure principal 8 lorsqu'un défaut dans un départ alimenté par un dispositif de coupure secondaire est détecté. Le signal particulier prioritaire Sp commande aussi la fermeture du dispositif de fermeture principal lorsqu'un dispositif de coupure secondaire a été commandé en ouverture suite à un défaut. Ainsi, le circuit de contrôle primaire 9 comporte des moyens pour détecter un ledit signal particulier prioritaire et pour commander l'ouverture et la fermeture des moyens de coupure principaux en fonction de la présence dudit signal particulier prioritaire.

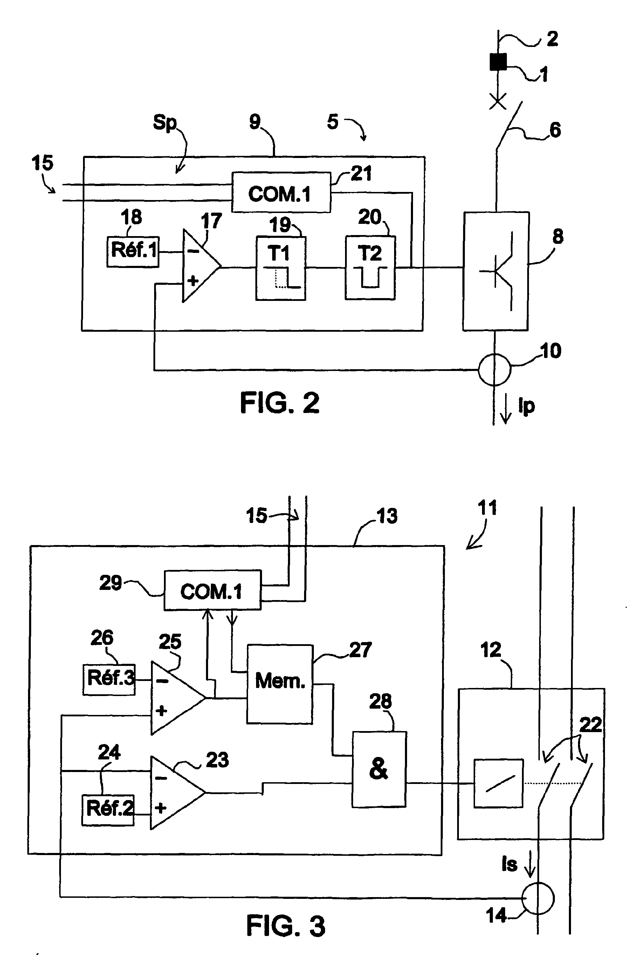

La figure 2 montre un schéma bloc simplifié d'une partie principale 5 comportant un circuit de contrôle principal 9. Le capteur de courant 10 fournit à un comparateur 17 un signal représentatif d'un courant Ip circulant dans au moins un conducteur du dispositif de coupure principal 8. Ce signal est comparé à un seuil de référence 18. Si un défaut électrique apparaît, le seuil est dépassé et le comparateur commande un temporisateur à l'ouverture 19 de durée T1 pour permettre à un circuit de contrôle secondaire de détecter le défaut. Puis, un circuit temporisé 20 commande l'ouverture du dispositif de coupure principal pendant une durée T2 pour permettre l'ouverture d'un dispositif de coupure secondaire. La durée T1 est de préférence inférieure à une milliseconde et la durée T2 est de préférence inférieure à 10 millisecondes. Les circuits 18 et 19 peuvent être disposés dans un ordre inversé, les effets sur la commande du dispositif 8 étant les mêmes.

Le circuit 9 de la figure 2 comporte un circuit de communication 21 permettant de commander le dispositif de coupure principal en fonction d'informations de commande envoyées sur la ligne de communications ou en fonction de la présence sur la ligne d'un signal Sp particulier prioritaire. Ainsi, lorsqu'un signal Sp envoyé par un circuit de contrôle secondaire est présent sur la ligne, le dispositif 8 est ouvert pendant la durée dudit signal Sp.

La figure 3 montre un schéma bloc simplifié d'une partie secondaire 11 comportant un circuit de contrôle secondaire 13 et un dispositif de coupure secondaire 12. Le dispositif 12 est un relais électromagnétique comportant des contacts électriques 22. Un capteur de courant 14 fournit un signal représentatif d'un courant secondaire Is à un comparateur 23 qui permet d'autoriser l'ouverture du relais 12 si le courant Is est inférieur à un seuil d'ouverture prédéterminé. Ce seuil est fourni par une référence 24 au comparateur 23. Pour détecter la présence d'un défaut, un second comparateur 25 reçoit le signal représentatif du courant Is et il le compare à un seuil de défaut représenté par une référence 26. Lorsqu'un seuil de défaut est dépassé, le comparateur 25 commande un circuit de mémorisation 27 de commande d'ouverture. Ensuite, un circuit de commande 28 connecté au comparateur 23 et au circuit de mémorisation 27 commande l'ouverture du relais si une commande d'ouverture est mémorisée et si le courant devient inférieur au seuil d'ouverture. Dans certains cas le dispositif de coupure secondaire 12 peut comporter aussi un dispositif à composants électroniques de puissance notamment pour la régulation de courant ou de tension ou pour la modulation de l'éclairage ou la variation de vitesse.

Dans le mode de réalisation de la figure 3, le circuit de contrôle secondaire comporte un circuit de communication 29 connecté à la ligne de communication 15 et à des moyens de détection de défauts électriques tels le comparateur 25. Lorsqu'un défaut est détecté, il émet sur la ligne de communication 15 un signal Sp particulier prioritaire pour commander l'ouverture du dispositif 8 de coupure principal. Pendant l'émission du signal Sp le courant baisse ou est interrompu et le dispositif de coupure secondaire 12 peut être commandé en ouverture dés que le courant détecté par le capteur 14 dévient inférieur au seuil d'ouverture.

Le circuit de communication 29 peut servir aussi à communiquer avec d'autres dispositifs de communication disposés notamment dans une centrale 16 ou une partie principale 3. Dans ce cas, le circuit 29 peut envoyer des informations d'états des différents dispositifs de coupure secondaires et/ou des informations sur les valeurs des courants circulant dans des départs. Le circuit 29 peut aussi recevoir des commandes de fermeture ou d'ouverture de dispositifs de coupure secondaires envoyées notamment par une centrale ou une partie principale.

Les schémas des figures 2 et 3 sont des exemples de réalisation symboliques montrant des fonctions réalisées par des circuits de contrôle. Ces circuits peuvent être réalisés sous d'autres formes. Ils peuvent notamment être intégrés dans des microprocesseurs, dans des microcontrôleurs, dans des dispositifs comportant des circuits analogiques, des circuits numériques et/ou des convertisseurs analogiques-numériques. Les circuits de contrôle 9 et 13 peuvent avoir des fonctions de traitement de signal et des fonctions de protections électriques et de déclenchement. Par exemple, des fonctions de traitement de courant efficace ou crête et des fonctions de déclenchement long retard, court retard, instantané, et/ou de protection terre.

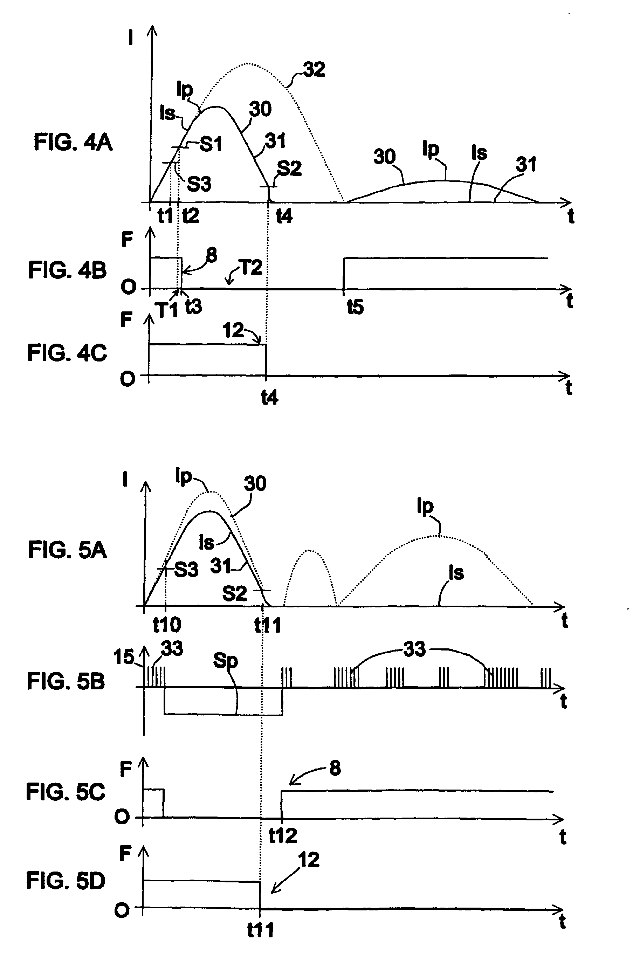

Les figures 4A, 4B et 4C illustrent des courbes de fonctionnement et d'un dispositif selon un premier mode réalisation. Sur la figure 4A, deux courbes 30 et 31 représentent un courant de court-circuit détecté par un capteur 10 de courant principal Ip et un capteur 14 de courant secondaire Is, et une courbe 32 représente un courant de court circuit présumé sans coupure. La figure 4B représente la commande d'un dispositif de coupure principal 8 et la figure 4C représente la commande d'un dispositif de coupure secondaire 12.

A un instant t1, le courant Is dans un dispositif de coupure secondaire dépasse un seuil S3 de détection de défaut électrique dans un circuit de contrôle secondaire 13. Puis, à un instant t2, le courant de Ip dépasse un seuil de courant S1 de détection d'un défaut électrique dans un circuit de contrôle principal 9. Après un délai T1 de faible durée, à un instant t3, le dispositif de coupure principal est commandé en ouverture et le dispositif de coupure secondaire reste fermé. Puis à instant t4, le courant secondaire Is devient inférieur à un seuil S2 d'ouverture et le dispositif de coupure secondaire est commandé en ouverture. Lorsque le dispositif de coupure secondaire est ouvert, à un instant t5, le dispositif de coupure principal est commandé en fermeture. Ainsi le départ en défaut est coupé sans usure des contacts du dispositif de coupure secondaire. La durée T2 de la coupure du dispositif de coupure principal, entre les instants t3 et t5, est brève et ne perturbe pas le fonctionnement de l'installation électrique. La durée de la coupure est inférieure à une période d'un réseau électrique alternatif, Avantageusement la durée de coupure est de l'ordre d'une demi-période soit de 8 à 10 millisecondes environ.

Les figures 5A, 5B, 5C et 5D illustrent des courbes de fonctionnement et d'un dispositif selon un second mode réalisation. Sur la figure 5A, deux courbes 30 et 31 représentent un courant de court-circuit détecté par u capteur 10 de courant principal Ip et un capteur 14 de courant secondaire Is. La figure 5B représente des signaux sur une ligne 15 de communication sur laquelle peuvent circuler des signaux 33 de communication et un signal Sp particulier prioritaire. La figure 5C représente la commande d'un dispositif de coupure principal 8 et la figure 5D représente la commande d'un dispositif de coupure secondaire 12.

A un instant t10, un courant secondaire Is dépasse un seuil S3 de détection de défaut électrique dans un circuit de contrôle secondaire 13. Le circuit 13 force alors un signal Sp sur la ligne de communication 15 et des trames de signaux de communication 33 sont interrompues. Un circuit de contrôle principal 5 détecte le signal Sp particulier prioritaire et commande l'ouverture du dispositif de coupure principal 8. les courant Ip et Is baissent puis à l'instant t11 le circuit de contrôle 13 détecte le passage de Is en dessous du seuil de d'ouverture S2. Le dispositif de coupure secondaire 12, sur lequel un défaut est apparu, est alors commandé en ouverture. Puis à l'instant t12, lorsque le dispositif 12 est ouvert, le signal Sp et interrompu et le circuit de contrôle principal commande la fermeture du dispositif de coupure principal. Les trames de signaux de communication 33 peuvent alors circuler de nouveau.

Le signal Sp particulier prioritaire est de nature différente des signaux 33 de trames de communication. Il peut être une tension continue par exemple d'amplitude différente des signaux de trame. Avantageusement, le signal Sp peut être de polarité inversée par rapport à des impulsions des signaux de communication comme représenté sur la figure 5B.

Dans le second mode de réalisation, il est possible de faire fonctionner le dispositif de distribution aussi avec le mode de fonctionnement décrit dans le premier mode de réalisation. Les courants de défaut détectés peuvent être des courants de courts-circuits, de surcharge et/ou des courants de défauts différentiels.

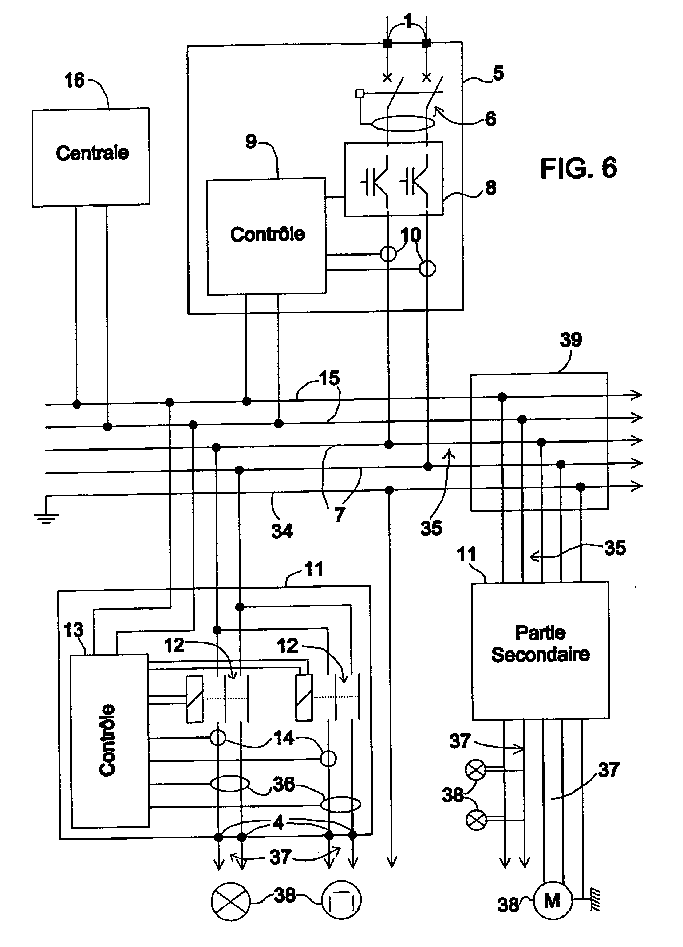

Sur le schéma de la figure 6, la partie principale 5 comporte un disjoncteur de branchement 6 connecté entre l'entrée 1 et le dispositif de coupure principal 8. Le dispositif de coupure principal 8 est un dispositif à semi-conducteurs de puissance. Dans ce mode de réalisation, le circuit de la ligne de répartition 7 comporte deux conducteurs, la ligne communication 15 comporte deux conducteurs, et une ligne 34 de terre ou de masse électrique comporte un conducteur. De préférence, les conducteurs de la ligne de répartition, de la ligne de communication et le conducteur de la ligne de terre sont disposés dans une nappe 35 comportant au moins cinq conducteurs. Des nappes 35 peuvent être raccordées à travers des boîtes 39 de raccordement ou de dérivation appropriées.

Des parties secondaires 11 peuvent faire parties de modules de communication d'automatismes de bâtiment. Dans ce cas, des circuits de contrôle 13 peuvent comporter des fonctions de protection électriques, et des fonctions de communication et d'automatismes pour commander des dispositifs de coupure secondaires. Les parties secondaires 11 peuvent être disposées dans des boîtes de distribution ou de raccordement électrique.

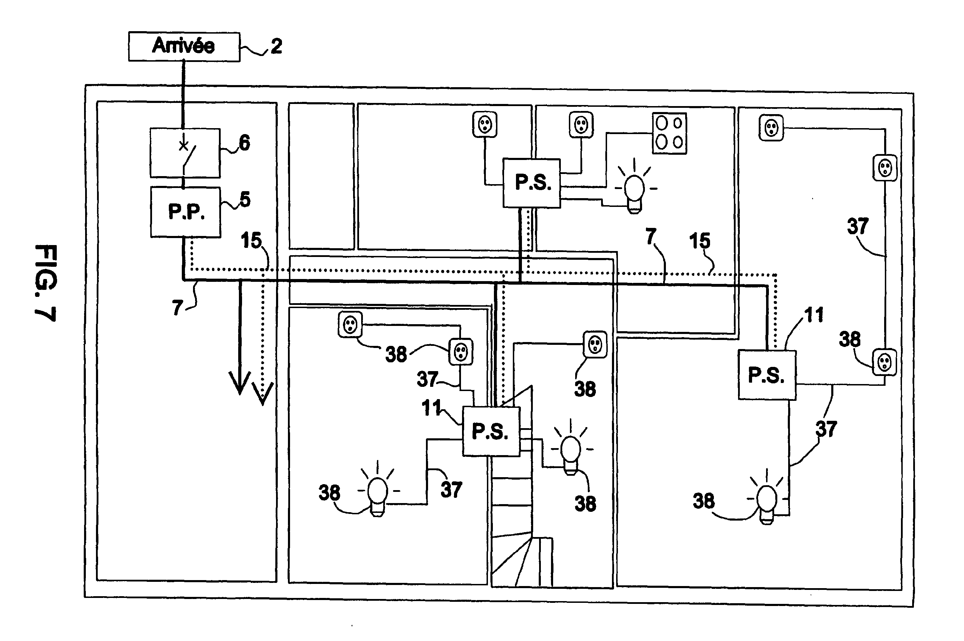

Une partie secondaire 11 de la figure 7 comporte des capteurs de courant polaire 14 et des capteurs 36 de courants différentiels ou de protection terre. Les départs 4 alimentent, à travers des lignes de distribution électriques 37, des charges électriques 38 telles que des lampes, des prises de courant, des appareils chauffants, ou des moteurs.

Les dispositifs de coupure secondaires 12 sont de préférence des relais électromagnétiques comportant des contacts électriques. Ces relais peuvent être de type bistable avec une position stable fermée et une position stable ouverte.

La figure 7 représente le plan d'une installation électrique pouvant comporter les caractéristiques selon un mode de réalisation de l'invention. Des parties secondaires 11 pouvant être disposées dans des endroits peu accessibles comme, par exemple, des plafonds.

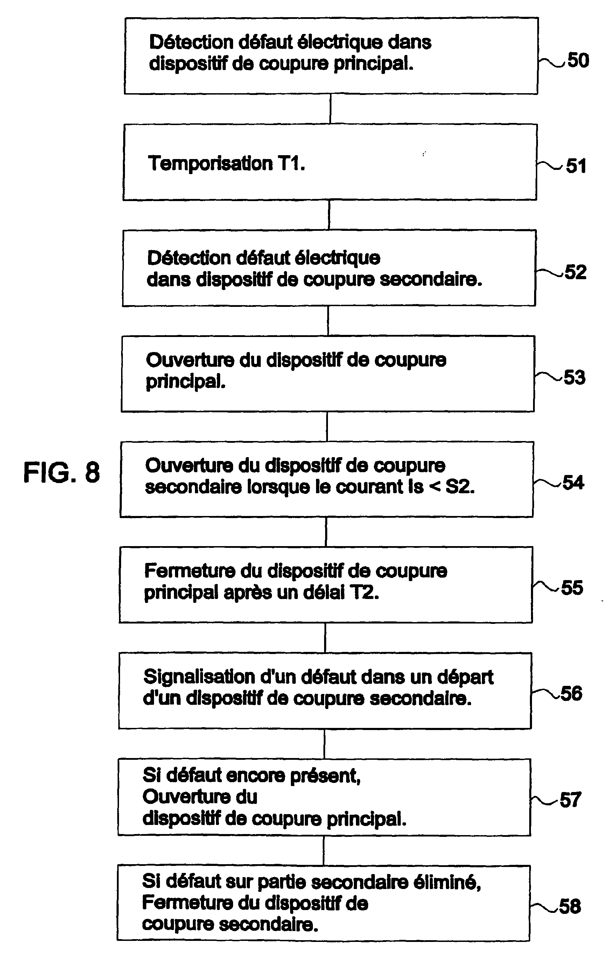

L'organigramme de la figure 8 représente un premier procédé de protection électrique pour un dispositif de distribution ou une installation électrique comportant une partie principale avec un dispositif de coupure principal, au moins une partie secondaire comportant un dispositif de coupure secondaire, et une ligne de répartition entre les parties principale et secondaire.

Dans ce procédé, une première étape 50 permet de détecter par un circuit de contrôle principal un défaut électrique dans un courant parcourant un dispositif de coupure principal. A une étape 51, une temporisation T1 de courte durée permet la prise en compte d'un défaut par une partie secondaire. Une étape 52 permet de détecter un défaut électrique par un circuit de contrôle secondaire d'un courant de défaut dans un dispositif de coupure secondaire. A une étape 53, le dispositif de coupure principal est ouvert pour limiter ou interrompre momentanément le courant dans le dispositif de coupure secondaire. Ensuite, à une étape 54, le dispositif de coupure secondaire en défaut est commander en ouverture lorsque le courant le traversant est inférieur à un seuil de courant d'ouverture S2. A une étape 55, le dispositif de coupure secondaire est commandé en fermeture après un délai T2. Ce délai peut dépendre par exemple du temps d'ouverture du dispositif de coupure secondaire.

Une étape 56 permet de signaler un défaut dans un départ d'un dispositif de coupure secondaire. Une telle signalisation peut être consignée dans la partie principale ou être transmise sur une ligne de communication depuis une partie secondaire ou une partie principale vers une centrale. Si le défaut est encore présent après ouverture du dispositif de coupure secondaire ou si un dispositif de coupure secondaire n'a pas de courant de défaut, le dispositif de coupure principal est commandé en ouverture à une étape 57. Si un défaut sur un départ d'une partie secondaire est éliminé, un dispositif de coupure secondaire peut être commandé en fermeture pour rétablir le courant. La commande peut avantageusement être transmise à travers une ligne de communication depuis une centrale ou une partie principale.

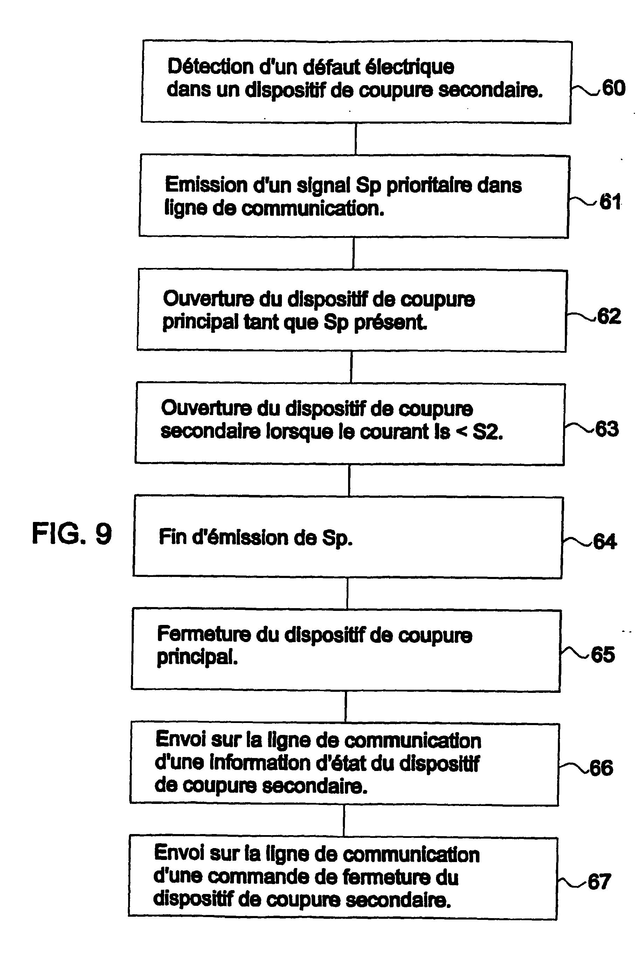

L'organigramme de la figure 9 représente un second procédé de distribution électrique pour un dispositif de distribution ou une installation électrique comportant une partie principale avec un dispositif de coupure principal et au moins une partie secondaire comportant un dispositif de coupure secondaire une ligne de répartition et une ligne de communication entre les parties principale et secondaire.

Dans ce procédé, une première étape 60 permet de détecter par un circuit de contrôle secondaire un défaut électrique dans un courant parcourant un dispositif de coupure secondaire. Lorsqu'un défaut est détecté, à une étape 61, un signal particulier prioritaire Sp est envoyé sur la ligne de communication pour commander l'ouverture d'un dispositif de coupure principal. Tant que le signal Sp est présent, à une étape 62, le dispositif de coupure reste ouvert. Puis, à une étape 63, lorsque le courant dans le dispositif de coupure secondaire Is est inférieur à un seuil d'ouverture S2, le dispositif de coupure est commandé en ouverture. Puis, lorsque le dispositif de coupure est ouvert, une étape 64 marque la fin d'émission du signal prioritaire Sp. A une étape 65, le dispositif de coupure principal est alors refermé et l'alimentation électrique est rétablie.

Une étape 66 permet d'envoyer sur la ligne de communication des informations représentatives de l'état des dispositifs de coupure secondaire, notamment l'état de celui qui est en position ouverte suite à une ouverture sur défaut électrique. Dans ces informations, il est aussi possible d'identifier les causes de déclenchement ou d'ouverture notamment des courts circuits, des surcharges, des fuites à la terre ou des commandes d'arrêt d'urgence. Une étape 67 permet d'envoyer sur la ligne de communication une commande de fermeture d'un dispositif de coupure secondaire. Cette commande concerne notamment la fermeture de dispositifs de coupure secondaires après élimination d'un défaut électrique.

Les procédés des figures 8 et 9 peuvent fonctionner de manière indépendante ou être associés dans un même procédé. Un dispositif de distribution électrique et une installation peuvent avoir des parties fonctionnant selon le premier procédé, des parties fonctionnant selon le second procédé et/ou des parties fonctionnant selon les deux procédés en combinaison.

## Revendications

1. Dispositif de distribution électrique comportant une entrée (1) de raccordement d'une ligne électrique d'arrivée (2), des moyens de protection électrique (3) connectés à l'arrivée et comportant des départs (4) de distribution électrique destinés à alimenter des charges électriques,
lesdits moyens de protection comportant :
- une partie principale (5) comportant des moyens de coupure principaux (8) connectés à l'entrée de raccordement de la ligne électrique d'arrivée, et des moyens de contrôle principaux (9) pour contrôler l'ouverture et la fermeture des moyens de coupure principaux,
et
- une ligne (7) de répartition d'énergie électrique connectée aux moyens de coupure principaux (8) de la partie principale (5),
dispositif **caractérisé en ce que** lesdits moyens de protection comportent au moins une partie secondaire (11) séparée de la partie principale (5) et comportant au moins un dispositif de coupure secondaire (12) et des moyens de contrôle secondaires (13) pour commander l'ouverture et la fermeture du au moins un dispositif de coupure secondaire (12), ledit au moins un dispositif de coupure secondaire étant connecté à ladite ligne de répartition et à au moins un départ (4) de distribution électrique, les moyens de contrôle secondaires autorisant l'ouverture d'au moins un dispositif de coupure secondaire si un courant traversant ledit dispositif de coupure est inférieur à un seuil (24, S2) de courant d'ouverture prédéterminé.

2. Dispositif de distribution selon la revendication 1 **caractérisé en ce que** les moyens de contrôle principaux comportent des premiers moyens de détection (10, 17, 18) d'un courant de défaut principal (Ip) et des premiers moyens de commande (19, 20) commandant l'ouverture des moyens de coupure principaux (8) pendant une première durée prédéterminée (T2), lesdits premiers moyens de détection détectant un défaut principal lorsqu'un premier seuil (18, S1) de courant de défaut principal est dépassé par un signal représentatif d'un courant (Ip) circulant dans les moyens de coupure principaux.

3. Dispositif de distribution selon la revendication 2 **caractérisé en ce que** les premiers moyens de commande (19, 20) commandent l'ouverture des moyens de coupure principaux (8) après un délai ayant une seconde durée prédéterminée (T1) et succédant à la détection d'un défaut principal.

4. Dispositif de distribution selon l'une des revendications 2 ou 3 **caractérisé en ce que** la valeur maximale de la première durée prédéterminée (T2) est de dix millisecondes (10 mS).

5. Dispositif de distribution selon l'une quelconque des revendications 1 à 4 **caractérisé en ce que** la partie principale (5) comporte un disjoncteur (6) de branchement connecté à l'entrée (1) de raccordement d'une ligne électrique d'arrivée et connecté en série avec les moyens de coupure principaux (8).

6. Dispositif de distribution selon l'une quelconque des revendications 1 à 5 **caractérisé en ce que** les moyens de coupure principaux (8) sont des moyens de coupure à semiconducteurs de puissance.

7. Dispositif de distribution selon l'une quelconque des revendications 1 à 6 **caractérisé en ce que** les moyens de contrôle secondaires (13) comportent des seconds moyens (25, 26) de détection d'un courant de défaut secondaire (Is) circulant dans au moins un dispositif de coupure secondaire (12), et des seconds moyens (23, 27, 28) de commande commandant l'ouverture dudit au moins un dispositif de coupure secondaire si un défaut secondaire a été détecté et si un courant traversant ledit dispositif de coupure est inférieur au seuil (24, S2) de courant d'ouverture prédéterminé, lesdits seconds moyens de détection détectant un défaut secondaire lorsqu'un second seuil de défaut secondaire (26, S3) est dépassé par un signal représentatif d'un courant (Is) circulant dans ledit au moins un dispositif de coupure secondaire (12).

8. Dispositif de distribution selon la revendication 7 **caractérisé en ce que** les seconds moyens de détection d'un courant de défaut secondaire (14, 25, 26) circulant dans au moins un dispositif de coupure secondaire détectent un défaut polaire correspondant à au moins un courant (Is) circulant dans au moins un conducteur dudit au moins un dispositif de coupure secondaire.

9. Dispositif de distribution selon l'une des revendications 7 ou 8 **caractérisé en ce que** les seconds moyens de détection d'un courant de défaut secondaire circulant dans au moins un dispositif de coupure secondaire (12) comportent des moyens (36) pour détecter un courant de défaut différentielle circulant dans au moins deux conducteurs dudit au moins un dispositif de coupure secondaire.

10. Dispositif de distribution selon l'une quelconque des revendications 1 à 9 **caractérisé en ce qu'**au moins un dispositif de coupure secondaire (12) est un relais électromagnétique.

11. Dispositif de distribution selon l'une quelconque des revendications 1 à 10 **caractérisé en ce qu'**au moins un dispositif de coupure secondaire (12) comporte un dispositif de coupure à composant électronique de puissance.

12. Dispositif de distribution selon l'une quelconque des revendications 1 à 11 **caractérisé en ce qu'**il comporte une ligne de communication (15) et **en ce qu'**au moins une partie secondaire (11) comporte des moyens de contrôle secondaires (13) comportant des moyens de communication (29) connectés à la ligne de communication (15), lesdits moyens de communication (29) pouvant recevoir des informations de fermeture pour fermer au moins un dispositif de coupure secondaire (12).

13. Dispositif de distribution selon la revendication 12 **caractérisé en ce qu'**il comporte une centrale (16) connectée à la ligne de communication (15) pour recevoir des informations d'états et pour commander l'ouverture et/ou la fermeture d'au moins un dispositif de coupure secondaire (12).

14. Dispositif de distribution selon l'une des revendications 12 ou 13 **caractérisé en ce que** les moyens de contrôle primaires (9) comportent des moyens de communication (21) connectés à la ligne de communication (15) pour recevoir des signaux de commande.

15. Dispositif de distribution selon la revendication 14 **caractérisé en ce que** des moyens de contrôles secondaires (13) envoient sur la ligne de communication (15) un signal prioritaire (Sp) de caractéristiques différentes d'un signal (33) de communication d'informations pour commander l'ouverture des moyens de coupure principaux (8) lorsqu'un défaut électrique dans un départ alimenté par un dispositif de coupure secondaire (12) est détecté et pour commander la fermeture des moyens de coupure principaux (8) lorsqu'un dispositif de coupure secondaire (12) a été commandé en ouverture suite à un défaut, les moyens de contrôle primaires comportant des moyens (21) pour détecter ledit signal prioritaire et pour commander l'ouverture et la fermeture des moyens de coupure principaux en fonction de la présence dudit signal prioritaire.

16. Dispositif de distribution selon l'une quelconque des revendications 1 à 15 **caractérisé en ce qu'**au moins une partie secondaire (11) est disposée dans une boîte de distribution ou de raccordement électrique de bâtiment.

17. Dispositif de distribution selon l'une quelconque des revendications 1 à 16 **caractérisé en ce qu'**au moins une partie secondaire (12) est disposée dans un module de communication d'automatisme de bâtiment, les moyens de contrôle secondaires de la dite partie secondaire comportant des fonctions de protections électriques et des fonctions de communication et d'automatismes pour commander des dispositifs de coupure secondaires.

18. Dispositif de distribution selon l'une quelconque des revendications 12 à 17 **caractérisé en ce que** une ligne de répartition d'énergie électrique (7) comportant au moins deux conducteurs, une ligne de communication (15) comportant au moins deux conducteurs, et une ligne (34) de terre ou de masse électrique comportant au moins un conducteur sont disposées dans une nappe (35) comportant au moins cinq conducteurs.

19. Installation électrique comportant une ligne électrique d'arrivée (2), un dispositif de distribution électrique connectée à la ligne électrique d'arrivée, et des lignes de distributions (37) connectées entre le dispositif distribution électrique et des appareils ou des charges électriques (38), **caractérisée en ce que** le dispositif de distribution est un dispositif de distribution selon l'une quelconque des revendications 1 à 18 ayant une partie principale (5) connectée à la ligne électrique d'arrivée et au moins une partie secondaire (11) connectée à des lignes de distribution (37).

20. Procédé de protection électrique pour un dispositif de distribution électrique **caractérisé en ce qu'**il comporte :
- une première étape (50) de détection d'un défaut électrique dans des moyens de coupure principaux (8),
- une seconde étape (52) de détection d'un défaut électrique dans des moyens de coupure secondaires (12) reliés par une ligne de répartition (7) aux moyens de coupures principaux,
- une étape (51) de temporisation,
- une étape (53) d'ouverture des moyens de coupure principaux,
- une étape (54) d'ouverture des moyens de coupure secondaires lorsqu'un courant les traversant est inférieur à une valeur de seuil de courant d'ouverture prédéterminé suite à une détection de défaut à la seconde étape (52) de détection,
- une première étape (55) de fermeture des moyens de coupure principaux après un délai prédéterminé.

21. Procédé de protection électrique selon la revendication 20 **caractérisé en ce qu'**il comporte :
- une seconde étape (62) d'ouverture des moyens de coupure principaux (8) commander par l'émission d'un signal prioritaire (Sp) de commande d'ouverture sur une ligne de communication (15) reliée entre des moyens de coupure secondaire et les moyens de coupure principaux, ledit signal prioritaire étant émis lorsqu'un courant de défaut circulant dans un dispositif de coupure secondaire est détecté,
- une seconde étape (65) fermeture des moyens de coupure principaux après une étape (64) fin d'émission dudit signal prioritaire.

22. Procédé de protection électrique pour un dispositif de distribution électrique **caractérisé en ce qu'**il comporte :
- une première étape (60) de détection d'un défaut électrique dans des moyens de coupure secondaires (12) reliés par une ligne de répartition et une ligne de communication (15) à des moyens de coupures principaux (8),
- une étape (61) de début d'émission d'un signal prioritaire (Sp) de commande d'ouverture sur ladite ligne de communication pour la commande d'ouverture de moyens de coupure principaux,
- une première étape (62) d'ouverture des moyens de coupure principaux commandés par l'émission dudit signal prioritaire de commande d'ouverture sur ladite ligne de communication,
- une seconde étape (63) d'ouverture des moyens de coupure secondaires lorsqu'un courant les traversant est inférieur à une valeur de seuil de courant d'ouverture prédéterminé suite à une détection de défaut à la première étape de détection,
- une étape (64) de fin d'émission dudit signal prioritaire (Sp) de commande d'ouverture,
- une étape (65) de fermeture des moyens de coupure principaux après l'étape de fin d'émission du signal prioritaire de commande d'ouverture.

## Claims

1. Electrical distribution device comprising an input (1) for connection of an incoming electrical line (2), electrical protection means (3) connected to the incomer and comprising electrical distribution feeders (4) designed to supply electrical loads,
said protection means comprising:
- a main part (5) comprising main breaking means (8) connected to the input for connecting the incoming electrical line, and main control means (9) for controlling opening and closing of the main breaking means, and
- an electrical power distribution line (7) connected to the main breaking means (8) of the main part (5),
device **characterized in that** said protection means comprise at least one secondary part (11) separated from the main part (5) and comprising at least one secondary breaking device (12) and secondary control means (13) to command opening and closing of the at least one secondary breaking device (12), said at least one secondary breaking device being connected to said distribution line and to at least one electrical distribution feeder (4), the secondary control means enabling opening of at least one secondary breaking device if a current flowing in said breaking device is lower than a preset opening current threshold (24, S2).

2. Distribution device according to claim 1 **characterized in that** the main control means comprise first detection means (10, 17, 18) for detecting a main fault current (Ip) and first control means (19, 20) commanding opening of the main breaking means (8) during a preset first time duration (T2), said first detection means detecting a main fault when a first main fault current threshold (18, S1) is exceeded by a signal representative of a current (Ip) flowing in the main breaking means.

3. Distribution device according to claim 2 **characterized in that** the main control means (19, 20) command opening of the main breaking means (8) after a time delay having a preset second time duration (T1) and subsequent to detection of a main fault.

4. Distribution device according to one of claims 2 or 3 **characterized in that** the maximum value of the preset first time delay (T2) is ten milliseconds (10 ms).

5. Distribution device according to any one of claims 1 to 4 **characterized in that** the main part (5) comprises a tie breaker (6) connected to the input (1) for connecting an incoming electrical line and connected in series with the main breaking means (8).

6. Distribution device according to any one of claims 1 to 5 **characterized in that** the main breaking means (8) are breaking means with power semi-conductors.

7. Distribution device according to any one of claims 1 to 6 **characterized in that** the secondary control means (13) comprise second detection means (25, 26) for detecting a secondary fault current (Is) flowing in at least one secondary breaking device (12), and second control means (23, 27, 28) commanding opening of said at least one secondary breaking device if a secondary fault has been detected and if a current flowing in said breaking device is lower than the preset opening current threshold (24, S2), said second detection means detecting a secondary fault when a second secondary fault threshold (26, S3) is exceeded by a signal representative of a current (Is) flowing in said at least one secondary breaking device (12).

8. Distribution device according to claim 7 **characterized in that** the second detection means (14, 25, 26) for detecting a secondary fault current flowing in at least one secondary breaking device comprise means for detecting a polar fault corresponding to at least one current (Is) flowing in at least one conductor of said at least one secondary breaking device.

9. Distribution device according to one of claims 7 or 8 **characterized in that** the second detection means for detecting a secondary fault current flowing in at least one secondary breaking device (12) comprise means (36) for detecting a ground fault current flowing in at least two conductors of said at least one secondary breaking device.

10. Distribution device according to any one of claims 1 to 9 **characterized in that** at least one secondary breaking device (12) is an electromagnetic relay.

11. Distribution device according to any one of claims 1 to 10 **characterized in that** at least one secondary breaking device (12) comprises a breaking device with an electronic power component.

12. Distribution device according to any one of claims 1 to 11 **characterized in that** it comprises a communication line (15) and that at least one secondary part (11) comprises secondary control means (13) comprising communication means (29) connected to the communication line (15), said communication means (29) being able to receive closing information to close at least one secondary breaking device (12).

13. Distribution device according to claim 12 **characterized in that** it comprises a central unit (16) connected to the communication line (15) to receive status information and to command opening and/or closing of at least one secondary breaking device (12).

14. Distribution device according to one of claims 12 or 13 **characterized in that** the primary control means (9) comprise communication means (21) connected to the communication line (15) to receive control signals.

15. Distribution device according to claim 14 **characterized in that** secondary control means (13) send a priority signal (Sp) with different characteristics from an information communication signal (33) on the communication line (15) to command opening of the main breaking means (8) when an electrical fault is detected in a feeder supplied by a secondary breaking device (12) and to command closing of the main breaking means (8) when opening of a secondary breaking device (12) has been commanded following a fault, the primary control means comprising means (21) for detecting said priority signal and for commanding opening and closing of the main breaking means according to the presence of said priority signal.

16. Distribution device according to any one of claims 1 to 15 **characterized in that** at least one secondary part (11) is arranged in an electrical distribution or connection box of a building.

17. Distribution device according to any one of claims 1 to 16 **characterized in that** at least one secondary part (12) is arranged in an automation communication module of a building, the secondary control means of said secondary part comprising electrical protection functions and communication and automatic control functions to command secondary breaking devices.

18. Distribution device according to any one of claims 12 to 17 **characterized in that** an electrical power distribution line (7) comprising at least two conductors, a communication line (15) comprising at least two conductors, and an electrical earth or ground line (34) comprising at least one conductor are arranged in a flat cable (35) comprising at least five conductors.

19. Electrical installation comprising an incoming electrical line (2), an electrical distribution device connected to the incoming electrical line, and distribution lines (37) connected between the electrical distribution device and electrical apparatuses or loads (38), **characterized in that** the distribution device is a distribution device according to any one of claims 1 to 18 having a main part (5) connected to the incoming electrical line and at least one secondary part (11) connected to distribution lines (37).

20. electrical protection process for an electrical distribution device **characterized in that** it comprises:
- a first step (50) of detection of an electrical fault in main breaking means (8),
- a second step (52) of detection of an electrical fault in secondary breaking means (12) connected by a distribution line (7) to the main breaking means,
- a time delay step (51),
- an opening step (53) of the main breaking means,
- an opening step (54) of the secondary breaking means when a current flowing therein is lower than a preset opening current threshold value following detection of a fault at the second detection step (52),
- a first closing step (55) of the main breaking means after a preset time delay.

21. Electrical protection process according to claim 20 **characterized in that** it comprises:
- a second opening step (62) of the main breaking means (8) commanded by transmission of a priority opening command signal (Sp) on a communication line (15) connected between secondary breaking means and the main breaking means, said priority signal being transmitted when a fault current flowing in a secondary breaking device is detected,
- a second closing step (65) of the main breaking means after an end of transmission of said priority signal step (64).

22. Electrical protection process for an electrical distribution device **characterized in that** it comprises:
- a first step (60) of detection of an electrical fault in secondary breaking means (12) connected by a distribution line and a communication line (15) to main breaking means (8),
- a step (61) of beginning of transmission of a priority opening command signal (Sp) on said communication line to command opening of main breaking means,
- a first step (62) of opening of the main breaking means commanded by transmission of said priority opening command signal on said communication line,
- a second step (63) of opening of the secondary breaking means when a current flowing therein is lower than a preset opening current threshold value following detection of a fault at the first detection step,
- a step (64) of end of transmission of the priority opening command signal (Sp),
- a step (65) of closing of the main breaking means after the end of transmission of the priority opening command signal step.

## Patentansprüche

1. Elektrische Verteilereinrichtung mit einem Eingang (1) zum Anschluss einer elektrischen Einspeiseleitung (2), an die Einspeisung angeschlossene elektrische Schutzmittel (3) mit elektrischen Verteilerabgängen (4) zur Einspeisung von elektrischen Verbrauchern, welche Schutzmittel
- einen Hauptteil (5) mit an den Eingang zum Anschluss der elektrischen Einspeiseleitung angeschlossenen Hauptabschaltmitteln (8) sowie Hauptsteuermitteln (9) zur Steuerung der Aus- und Einschaltung der Hauptschutzmittel und
- eine an die Hauptschutzmittel (8) des Hauptteils (5) angeschlossene Verteilerleitung (7) zur elektrischen Energieverteilung umfassen,
welche Einrichtung **dadurch gekennzeichnet ist, dass** die genannten Schutzmittel mindestens einen vom Hauptteil (5) getrennten Sekundärteil (11) umfassen, der mindestens eine Sekundärabschalteinrichtung (12) sowie Sekundärsteuermittel (13) zur Steuerung der Aus- und Einschaltung der mindestens einfach vorhandenen Sekundärabschalteinrichtung (12) umfasst, wobei die genannte mindestens einfach vorhandene Sekundärabschalteinrichtung an die genannte Verteilerleitung und an mindestens einen elektrischen Verteilerabgang (4) angeschlossen ist und die Sekundärsteuermittel die Abschaltung mindestens einer Sekundärabschalteinrichtung ermöglichen, wenn ein über die genannte Abschalteinrichtung fließender Strom unterhalb eines bestimmten Ausschaltstrom-Schwellwerts (24, S2) liegt.

2. Verteilereinrichtung nach Anspruch 1, **dadurch gekennzeichnet, dass** die Hauptsteuermittel erste Detektionsmittel (10, 17, 18) zur Erkennung eines Hauptfehlerstroms (Ip) sowie erste Steuermittel (19, 20) zur Steuerung der Abschaltung der Hauptabschaltmittel (8) innerhalb einer bestimmten Zeitdauer (T2) umfassen, wobei die genannten ersten Detektionsmittel einen Hauptfehler erkennen, wenn ein erster Hauptfehlerstrom-Schwellwert (18, S1) von einem Signal überschritten wird, das einen über die Hauptabschaltmittel fließenden Strom (Ip) abbildet.

3. Verteilereinrichtung nach Anspruch 2, **dadurch gekennzeichnet, dass** die ersten Steuermittel (19, 20) die Abschaltung der Hauptabschaltmittel (8) nach Erkennung eines Hauptfehlers und Ablauf einer Zeitspanne mit einer bestimmten zweiten Dauer (T1) ansteuern.

4. Verteilereinrichtung nach einem der Ansprüche 2 oder 3, **dadurch gekennzeichnet, dass** der Maximalwert der bestimmten ersten Zeitdauer (T2) zehn Millisekunden (10 ms) beträgt.

5. Verteilereinrichtung nach irgendeinem der Ansprüche 1 bis 4, **dadurch gekennzeichnet, dass** der Hauptteil (5) einen Abzweig-Leistungsschalter (6) umfasst, der mit dem Eingang (1) zum Anschluss einer elektrischen Einspeiseleitung verbunden und in Reihe zu den Hauptabschaltmitteln (8) geschaltet ist.

6. Elektrische Verteilereinrichtung nach irgendeinem der Ansprüche 1 bis 5, **dadurch gekennzeichnet, dass** die Hauptabschaltmittel (8) als Abschaltmittel mit Leistungshalbleitern ausgebildet sind.

7. Elektrische Verteilereinrichtung nach irgendeinem der Ansprüche 1 bis 6, **dadurch gekennzeichnet, dass** die Sekundärsteuermittel (13) zweite Detektionsmittel (25, 26) zur Erkennung eines über mindestens eine Sekundärabschalteinrichtung (12) fließenden Sekundär-Fehlerstroms (Is) sowie zweite Steuermittel (23, 27, 28) umfassen, um die Abschaltung und die Einschaltung der genannten, mindestens einfach vorhandenen Sekundärabschalteinrichtung steuern, wenn ein Sekundärfehler erkannt wurde und wenn ein über die genannte Abschalteinrichtung fließender Strom unterhalb des bestimmten Ausschaltstrom-Schwellwerts (24, S2) liegt, wobei die genannten zweiten Detektionsmittel einen Sekundärfehler erkennen, wenn ein zweiter Sekundärfehler-Schwellwert (26, S3) von einem Signal überschritten wird, das einen über die genannte mindestens einfach vorhandene Sekundärabschalteinrichtung (12) fließenden Strom abbildet.

8. Elektrische Verteilereinrichtung nach Anspruch 7, **dadurch gekennzeichnet, dass** die zweiten Detektionsmittel zur Erkennung eines über mindestens eine Sekundärabschalteinrichtung fließenden Sekundärfehlerstroms (14, 25, 26) einen Polfehler erkennen, der mindestens einem, über mindestens einen Leiter der genannten, mindestens einfach vorhandenen Sekundärabschalteinrichtung fließenden Strom (Is) entspricht.

9. Elektrische Verteilereinrichtung nach einem der Ansprüche 7 oder 8, **dadurch gekennzeichnet, dass** die zweiten Detektionsmittel zur Erkennung eines über mindestens eine Sekundärabschalteinrichtung (12) fließenden Sekundärfehlerstroms Mittel (36) zur Erkennung eines über mindestens zwei Leiter der genannten, mindestens einfach vorhandenen Sekundärabschalteinrichtung fließenden Differenzfehlerstroms umfassen.

10. Elektrische Verteilereinrichtung nach irgendeinem der Ansprüche 1 bis 9, **dadurch gekennzeichnet, dass** mindestens eine Sekundärabschalteinrichtung (12) als elektromagnetisches Relais ausgebildet ist.

11. Elektrische Verteilereinrichtung nach irgendeinem der Ansprüche 1 bis 10, **dadurch gekennzeichnet, dass** mindestens eine Sekundärabschalteinrichtung (12) eine Abschalteinrichtung mit leistungselektronischen Bauteilen umfasst.

12. Elektrische Verteilereinrichtung nach irgendeinem der Ansprüche 1 bis 11, **dadurch gekennzeichnet, dass** sie eine Kommunikationsleitung (15) umfasst und dass mindestens ein Sekundärteil (11) Sekundärsteuermittel (13) mit an die Kommunikationsleitungen (15) angeschlossenen Kommunikationsmitteln (29) umfasst, welche Kommunikationsmittel (29) Einschaltinformationen empfangen können, um mindestens eine Sekundärabschalteinrichtung (12) einzuschalten.

13. Elektrische Verteilereinrichtung nach Anspruch 12, **dadurch gekennzeichnet, dass** sie eine mit der Kommunikationsleitung (15) verbundene Zentrale (16) zum Empfang von Statusinformationen sowie zur Steuerung der Abschaltung und/oder Einschaltung der mindestens einfach vorhandenen Sekundärabschalteinrichtung (12) umfasst.

14. Elektrische Verteilereinrichtung nach Anspruch 12 oder 13, **dadurch gekennzeichnet, dass** die Primärsteuermittel (9) an die Kommunikationsleitung (15) angeschlossene Kommunikationsmittel (21) zum Empfang von Steuersignalen umfassen.

15. Elektrische Verteilereinrichtung nach Anspruch 14, **dadurch gekennzeichnet, dass** die Sekundärsteuermittel (13) ein prioritäres Signal (Sp) über die Kommunikationsleitung (15) senden, dessen Kennwerte sich von einem Informationen enthaltenen Kommunikationssignal unterscheiden, um die Abschaltung (33) der Hauptabschaltmittel (8) bei Erkennung eines elektrischen Fehlers in einem über eine Sekundärabschalteinrichtung (12) gespeisten Abgang bzw. die Einschaltung der Hauptabschaltmittel (8) nach einer fehlerbedingten Ausschalt-Ansteuerung einer Sekundärabschalteinrichtung (12) zu steuern, wobei die Primärsteuermittel Detektionsmittel (21) zur Erkennung des genannten prioritären Signals und zur Steuerung der Abschaltung bzw. der Einschaltung der Hauptabschaltmittel in Abhängigkeit vom Anstehen des genannten prioritären Signals umfassen.

16. Elektrische Verteilereinrichtung nach irgendeinem der Ansprüche 1 bis 15, **dadurch gekennzeichnet, dass** mindestens ein Sekundärteil (11) in einem Verteilerkasten oder Gebäude-Anschlusskasten angeordnet ist.

17. Elektrische Verteilereinrichtung nach irgendeinem der Ansprüche 1 bis 16, **dadurch gekennzeichnet, dass** mindestens ein Sekundärteil (12) in einem Kommunikationsmodul zur Gebäudeautomatisierung angeordnet ist, wobei die Sekundärsteuermittel des genannten Sekundärteils elektrische Schutzfunktionen sowie Kommunikations- und Automatisierungsfunktionen zur Ansteuerung der Sekundärabschalteinrichtungen umfassen.

18. Elektrische Verteilereinrichtung nach irgendeinem der Ansprüche 12 bis 17, **dadurch gekennzeichnet, dass** eine elektrische Verteilerleitung (7) mit mindestens zwei Leitern, eine Kommunikationsleitung (15) mit mindestens zwei Leitern und eine Erdungs- oder Masseleitung (34) mit mindestens einem Leiter in einem mindestens fünf Leiter umfassenden Flachbandkabel (35) angeordnet sind.

19. Elektrische Installation mit einer elektrischen Einspeiseleitung (2), einer an die elektrische Einspeiseleitung angeschlossenen elektrischen Verteilereinrichtung und zwischen die elektrische Verteilereinrichtung und Geräte oder elektrische Verbraucher (38) geschaltete Verteilerleitungen (37), **dadurch gekennzeichnet, dass** die elektrische Verteilereinrichtung nach irgendeinem der Ansprüche 1 bis 18 ausgeführt ist und einen an die Einspeiseleitung angeschlossenen Hauptteil (5) sowie mindestens einen an Verteilerleitungen (37) angeschlossenen Sekundärteil (11) umfasst.

20. Elektrisches Schutzverfahren für eine elektrische Verteilereinrichtung, **dadurch gekennzeichnet, dass** es
- einen ersten Detektionsschritt (50) zur Erkennung eines elektrischen Fehlers in Hauptabschaltmitteln (8),
- einen zweiten Detektionsschritt (52) zur Erkennung eines elektrischen Fehlers in Sekundärabschaltmitteln (12), die über eine Verteilerleitung (7) mit den Hauptabschaltmitteln verbunden sind,
- einen Zeitverzögerungsschritt (51),
- einen Ausschaltschritt (53) zur Abschaltung der Hauptabschaltmittel,
- einen Ausschaltschritt (54) zur Abschaltung der Sekundärabschaltmittel, wenn nach Detektion eines Fehlers im zweiten Detektionsschritt (52) ein über diese Abschaltmittel fließender Strom unterhalb eines bestimmten Ausschaltstrom-Schwellwerts liegt,
- sowie einen ersten Einschaltschritt (55) zur Einschaltung der Hauptabschaltmittel nach Ablauf einer bestimmten Zeitdauer umfasst.

21. Elektrisches Schutzverfahren nach Anspruch 20, **dadurch gekennzeichnet, dass** es
- einen zweiten Ausschaltschritt (62) zur Abschaltung der Hauptabschaltmittel (8), welche durch Aussendung eines prioritären Abschaltsteuerungs-Signals (Sp) über eine zwischen die Sekundärabschaltmittel und die Hauptabschaltmittel geschaltete Kommunikationsleitung (15) gesteuert wird, wobei das genannte prioritäre Signal ausgesendet wird, wenn ein über eine Sekundärabschalteinrichtung fließender Fehlerstrom erkannt wurde,
- sowie einen zweiten Einschaltschritt (65) zur Einschaltung der Hauptabschaltmittel nach einem Stoppschritt zur Beendigung der Aussendung des prioritären Signals umfasst.

22. Elektrisches Schutzverfahren für eine elektrische Verteilereinrichtung, **dadurch gekennzeichnet, dass** es
- einen ersten Detektionsschritt (60) zur Erkennung eines elektrischen Fehlers in Sekundärabschaltmitteln (12), die über eine Verteilerleitung und einen Kommunikationsleitung (15) mit Hauptabschaltmitteln (8) verbunden sind,
- einen Startschritt (61) zum Beginn der Aussendung eines prioritären Ausschaltsteuerungs-Signals (Sp) über die genannte Kommunikationsleitung zur Steuerung der Abschaltung der Hauptabschaltmittel,
- einen ersten Ausschaltschritt (62) zur Abschaltung der durch Aussendung des genannten prioritären Ausschaltsteuerungs-Signals über die genannte Kommunikationsleitung angesteuerten Hauptabschaltmittel,
- einen zweiten Ausschaltschritt (63) zur Abschaltung der Sekundärabschaltmittel, wenn nach Detektion eines Fehlers im ersten Detektionsschritt ein über diese Abschaltmittel fließender Strom unterhalb eines bestimmten Ausschaltstrom-Schwellwerts liegt,
- einen Stoppschritt (64) zur Beendigung der Aussendung des genannten prioritären Ausschaltsteuerungs-Signals (Sp),
- sowie einen zweiten Einschaltschritt (65) zur Einschaltung der Hauptabschaltmittel nach dem Stoppschritt zur Beendigung der Aussendung des prioritären Ausschaltsteuerungs-Signals umfasst.
